(19) Europäisches Patentamt
European Patent Office
Office européen des brevets

(11) **EP 4 564 055 A1**

(12) **DEMANDE DE BREVET EUROPEEN**

(43) Date de publication:
**04.06.2025 Bulletin 2025/23**

(21) Numéro de dépôt: **24216401.0**

(22) Date de dépôt: **29.11.2024**

(51) Classification Internationale des Brevets (IPC):
**G01S 13/22** *(2006.01)* **G01S 13/26** *(2006.01)*
**G01S 7/282** *(2006.01)* **G01S 7/285** *(2006.01)*
**G01S 13/30** *(2006.01)*

(52) Classification Coopérative des Brevets (CPC):
**G01S 13/22; G01S 7/282; G01S 7/285;**
**G01S 13/26; G01S 13/30**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **30.11.2023 FR 2313339**

(71) Demandeur: **Commissariat à l'Energie Atomique et aux Energies Alternatives**
**75015 Paris (FR)**

(72) Inventeurs:
• **ZARUDNIEV, Mykhailo**
**38054 GRENOBLE CEDEX 09 (FR)**
• **OUVRY, Laurent**
**38054 GRENOBLE CEDEX 09 (FR)**
• **DEHOS, Cédric**
**38054 GRENOBLE CEDEX 09 (FR)**
• **COUROUVE, Pierre**
**38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **RADAR IMPULSIONNEL À MODULATION LINÉAIRE DE FRÉQUENCE**

(57) Dispositif de génération d'un signal radar comprenant : un générateur (110) de séries, répétées périodiquement, d'impulsions de déclenchement ($s_{PRF}$) présentant un espacement temporel variable linéairement; et un oscillateur (120) configuré pour recevoir en entrée lesdits impulsions de déclenchement et pour générer un train d'oscillations périodiques en correspondance de chaque dite impulsion de déclenchement ; caractérisé en ce que ledit oscillateur (120) présente une fréquence variable en fonction d'un signal de contrôle ($V_{tune}$) ; et en ce que le dispositif comprend également un générateur (112) dudit signal de contrôle, adapté pour varier linéairement la fréquence de l'oscillateur (120) d'un train d'oscillations périodiques à l'autre.

Dispositif radar comprenant une voie d'émission (1) comprenant un tel dispositif de génération d'un signal radar; et une voie de réception (2) configurée pour recevoir des échos dudit signal radar et pour les démoduler de manière synchrone à leur génération de manière à en extraire une information de temps de vol.

[Fig. 4]

**Description**

L'invention se situe dans le domaine des radars, et plus particulièrement des radars sur puce, pouvant être utilisés notamment pour la mesure de signaux vitaux d'un patient ou en tant que détecteur de présence, voir par exemple (Antide 2020). Ces radars doivent présenter à la fois une résolution spatiale élevée (de l'ordre de quelques centimètres) et une faible consommation (quelques dizaines de mW).

Une technique communément utilisée pour ces applications est celle de l'onde continue modulée en fréquence à rapport cyclique (FMCW-DC de l'anglais « Frequency-Modulated Continuous-Wave, Duty-Cycled »), voir par exemple (Liu 2019) et (Siligaris 2023). En effet, cette technique exploite le principe de la compression d'une onde émise avec une large bande vers une bande passante étroite en fréquence intermédiaire, ce qui permet d'utiliser des convertisseurs analogiques - numériques (ADC, de l'anglais « Analog-to-Digital Converters ») ayant une cadence d'acquisition relativement faible, de quelques MSps ou dizaines de MSps (1 MSps = $10^6$ échantillons par seconde - acronyme de l'anglais « Mega Samples per second »). Cependant, en présence de cibles présentant des sections efficaces radar (RCS, de l'anglais « Radar Cross Section ») très diverses, il sera nécessaire d'utiliser des ADC présentant une dynamique élevée, par exemple 9 à 12 bits ou plus, et donc une consommation relativement élevée.

Une alternative consiste à utiliser la technique d'impulsion radio ultra-large bande (IR-UWB), dans lequel une impulsion brève est émise et le temps de vol de son écho est mesuré pour déterminer la distance de la cible. Voir par exemple (Andersen 2017). Un avantage de cette technique est que, comme les signaux d'écho sont séparés dans le temps, il est possible d'appliquer un ajustement automatique du gain (AGC, de l'anglais « Automatic Gain Control ») pour rendre possible l'acquisition d'un environnement très contrasté en présence d'objets de RCS très diverses tout en limitant la dynamique des ADC. Par contre, l'obtention d'une bonne résolution spatiale repose sur l'utilisation d'une cadence d'acquisition élevée, de plusieurs GSpS (1 GSps = $10^9$ échantillons par seconde - acronyme de l'anglais « Giga Samples per second »).

Le document FR 3 116 613 divulgue un radar impulsionnel dans lequel l'espacement des impulsions varie dans le temps.

Le document FR 2 738 352 divulgue un radar impulsionnel dans lequel la fréquence de la porteuse varie d'une impulsion à l'autre.

L'article de Liu Yao-Hong et al « An Ultralow Power Burst-Chirp UWB Radar Transceiver for Indoor Vital Signal and Occupancy Sensing in 40-nm CMOS » IEEE Solid-State Circuit Letters, Vol. 2, n° 11, 1 novembre 2019 divulgue un radar impulsionnel dans lequel la fréquence de la porteuse varie au cours de chaque impulsion.

L'article de Sungeun Lee et al. « A K-Band CMOS UWB Radar Transmitter With a Bi-Phase Modulatung Pulsed Oscillator » divulgue un radar impulsionnel utilisant un oscillateur déclenché.

L'invention vise à surmonter, en tout ou en partie, les inconvénients précités de l'art antérieur. Plus particulièrement, elle vise à permettre d'utiliser des ADC présentant une dynamique plus faible que dans les radars FMCW-DC et une cadence d'acquisition plus faible que dans les radars IR-UWB, sans pour autant sacrifier ni la résolution spatiale, ni la dynamique de RCS des cibles détectables.

Conformément à l'invention, ce but est atteint grâce à la génération d'un signal radar constitué de séries, répétées périodiquement, de trains d'oscillations périodiques. Les trains d'oscillations d'une même série présentent un espacement temporel variable linéairement tandis que, à l'intérieur d'une série, la fréquence des oscillations varie linéairement d'un train d'oscillations périodiques à l'autre. Le signal radar étant impulsionnel (il est en effet constitué de trains d'oscillations périodiques espacés entre eux), les signaux d'échos sont séparés dans le temps, comme dans le cas de la technique IR-UWB, permettant un ajustement du gain qui autorise l'utilisation d'ADC de dynamique relativement faible même en présence d'un environnement contrasté.

Cette combinaison entre espacement variable des trains d'oscillations et modification de la fréquence des oscillations d'un train à l'autre est inconnue de l'art antérieur. Aussi, par exemple, dans FR 3 116 613 l'espacement des trains d'oscillations est variable, mais pas la fréquence des oscillations. Réciproquement, dans FR 2 738 352, c'est la fréquence des oscillations qui varie, mais l'espacement entre trains d'oscillations est constant.

Les présents inventeurs ont découvert et démontré que la combinaison d'un espacement variable des trains d'oscillations et d'une modification de la fréquence des oscillations d'un train à l'autre permet, de manière inattendue, une compression de la bande passante des échos lors de leur détection, autorisant l'utilisation d'ADC ayant une cadence d'acquisition relativement faible sans sacrifier la résolution spatiale, comme dans le cas de la technique FMCW-DC.

Aussi, un objet de l'invention est un dispositif de génération d'un signal radar comprenant :

- un générateur de séries, répétées périodiquement, d'impulsions de déclenchement, les impulsions d'une même série présentant un espacement temporel variable linéairement; et
- un oscillateur configuré pour recevoir en entrée lesdits impulsions de déclenchement et pour générer un train d'oscillations périodiques en correspondance de chaque dite impulsion de déclenchement ;

caractérisé en ce que

- ledit oscillateur présente une fréquence variable en fonction d'un signal de contrôle ; et en ce que
- le dispositif comprend également un générateur dudit signal de contrôle, adapté pour varier linéairement dans le temps la fréquence de l'oscillateur d'un train d'oscillations périodiques à l'autre pour des trains d'oscillations périodiques déclenchés par des impulsions de déclenchement appartenant à une même série.

Un autre objet de l'invention est un dispositif radar comprenant :

- une voie d'émission comprenant un dispositif de génération d'un signal radar tel qu'exposé ci-dessus ; et
- une voie de réception configurée pour recevoir des échos dudit signal radar et pour les démoduler de manière synchrone à leur génération de manière à en extraire une information de temps de vol.

Encore un autre objet de l'invention est un procédé de génération d'un signal radar comprenant la génération de séries, répétées périodiquement, de trains d'oscillations périodiques, les trains d'oscillations d'une même série présentant un espacement temporel variable linéairement; la fréquence des oscillations variant linéairement d'un train d'oscillations périodiques à l'autre dans une même série.

D'autres caractéristiques, détails et avantages de l'invention ressortiront à la lecture de la description faite en référence aux dessins annexés donnés à titre d'exemple et qui représentent, respectivement :

[Fig.1], le schéma fonctionnel d'un dispositif de génération radar selon un mode de réalisation de l'invention ;

[Fig. 2], le graphique d'un gabarit spectral que les signaux radar générés doivent respecter ;

[Fig. 3], le spectrogramme du signal radar généré par le dispositif de la [Fig. 1] ;

[Fig. 4], le schéma fonctionnel d'un dispositif radar selon un mode de réalisation de l'invention ;

[Fig. 5A], le signal à la sortie du mélangeur de la voie de réception du dispositif de la [Fig. 4], représenté dans le domaine temporel, dans le cas d'une cible unique située à une distance de 3,75 m (temps de vol : 25 ns) ;

[Fig. 5B], un agrandissement d'une portion de la [Fig. 5A] ;

[Fig. 6A], le signal à la sortie du mélangeur de la voie de réception du dispositif de la [Fig. 4], représenté dans le domaine spectral, également dans le cas d'une cible unique située à une distance de 3,75 m (temps de vol : 25 ns) ;

[Fig. 6B], un agrandissement d'une portion de la [Fig. 6A] ;

[Fig. 7A], [Fig. 7B] et [Fig. 7C], respectivement, les signaux en sortie de la voie de réception du mélangeur du dispositif de la [Fig. 4], du filtre passe-bas et d'un module de calcul de la transformée de Fourier, dans le cas de trois cibles situées à 1m, 5m et 12m ;

[Fig. 8], le schéma fonctionnel d'un dispositif radar selon un autre mode de réalisation de l'invention ;

[Fig. 9A], le signal sous-échantillonné par la voie de réception du dispositif de la [Fig. 8], également dans le cas de trois cibles situées à 1m, 5m et 12m ;

[Fig. 9B], un agrandissement d'une portion de la [Fig. 9A] ;

[Fig. 10], le schéma fonctionnel d'un dispositif radar selon encore un autre mode de réalisation de l'invention ; et

[Fig. 11A], le signal sous-échantillonné par la voie de réception du dispositif de la [Fig. 10] dans le cas de trois cibles situées à des distances de 1 m, 5 m et 12 m, respectivement ;

[Fig. 11B], un agrandissement d'une portion de la [Fig. 11A] ; et

[Fig. 11C], le signal obtenu par transformée de Fourier de celui de la [Fig. 11A].

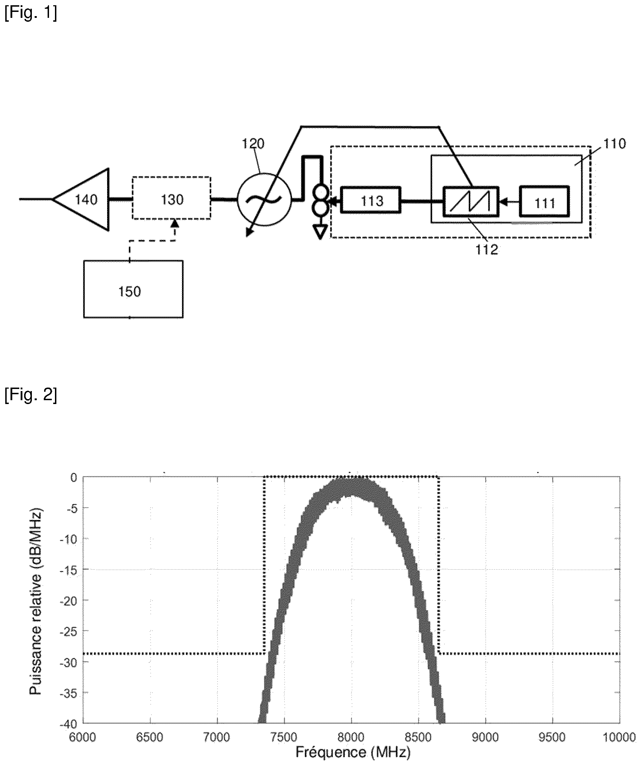

Le dispositif de génération d'un signal radar de la [Fig. 1] comprend un premier générateur [112] d'un premier signal $s_c(t)$ se présentant sous la forme d'une suite périodique de trains d'oscillations modulées linéairement en fréquence (« chirpée », de l'anglais « chirp », gazouillis) :

$$[0033]\ s_c = \sin\left(2\pi\left(f_{PRF0}\, t + \frac{B_{PRF}}{2T_{chirp}}\, t^2\right)\right),\ \ \forall t \in [0; T_{chirp}) \tag{1}$$

où $f_{PRF0}$ est la fréquence des oscillations du premier signal au début de chaque train d'oscillations modulées en fréquence, $\dfrac{B_{PRF}}{T_{chirp}}$ le taux de modulation en fréquence desdites oscillations, t le temps et $T_{chirp}$ la période de répétition des trains d'oscillations. On comprend qu'un train démarre avec des oscillations à la fréquence $f_{PRF0}$, fréquence qui augmente progressivement jusqu'à $f_{PRF0} + B_{PRF}$ : $B_{PRF}$ est donc la largeur de bande du signal $S_{PRF}$. En variante, la fréquence peut diminuer progressivement jusqu'à $f_{PRF0} - B_{PRF}$. Dans les deux cas, la fréquence des oscillations revient à une valeur $f_{PRF0}$ au bout du temps $T_{chirp}$ ou bien $T_{chirp} + T_{guard}$ si un intervalle de garde $T_{guard}$ est nécessaire entre deux trains d'impulsions.

La fréquence $f_{PRF0}$ est généralement de l'ordre de quelque MHz, par exemple comprise entre 1 et 100 MHz. Dans la suite on prendra $f_{PRF0}$ = 19,4 MHz, $B_{PRF}$ = 1,2 MHz (ce qui donne une fréquence de répétition moyenne des impulsions de 20 MHz) et $T_{chirp}$=40 µs.

Le premier générateur de signaux 112 peut, par exemple, comprendre un générateur de formes d'onde en dent de scie (rampes de tension) cadencé par une horloge 111 et pilotant un oscillateur contrôlé en tension (non représenté).

Le signal oscillatoire $s_c$ est utilisé par un générateur 113 d'impulsions de déclenchement pour générer des séries, répétées périodiquement, d'impulsions de déclenchement de manière synchrone aux oscillations dudit premier signal. Par exemple, une impulsion de déclenchement peut être générée en correspondance de chaque oscillation, ou à chaque passage par zéro du premier signal (donc deux impulsions de déclenchement par oscillation) etc. Dans la suite on considère un cas où une impulsion de déclenchement est générée à chaque début d'oscillation du premier signal, ce qui peut être obtenue en utilisant un contrôleur de rapport cyclique (« duty cycle controller » en anglais). On trouve aisément que la série d'impulsions correspondant à chaque répétition du train d'oscillations du premier signal est donnée par

$$S_{PRF} = \sum_{n=1}^{n_{max}} \delta_{f_{PRFmin}\, t + \frac{B_{PRF}}{2T_{chirp}}\, t^2 - t_s(n)},\ \ \forall t \in [0; T_{chirp}) \tag{2}$$

Où les positions temporelles $t_s(n)$ de chaque impulsion sont données par

$$t_s(n) = \frac{f_{PRF0} \cdot T_{chirp}}{B_{PRF}}\left(-1 + \sqrt{1 + \frac{2B_{PRF}}{f_{PRF0}^2 \cdot T_{chirp}}\,(n-1)}\right), n \in \{1, \ldots, n_{max}\} \tag{3}$$

$N_{max}$ étant le nombre d'impulsions de chaque série.

On remarque que l'espacement $\Delta t_s(n) = t_s(n+1) - t_s(n)$ entre deux impulsions varie linéairement (au moins en première approximation) dans le temps.

Sur la [Fig. 1], le bloc 110 désigne le générateur de séries, répétées périodiquement, d'impulsions de déclenchement $s_{FRF}$ à espacement variable. Ce bloc comprend l'horloge 111, le premier générateur de signaux 112 - à son tour constitué, dans l'exemple considéré ici, par un générateur de rampes de tension et un oscillateur contrôlé en fréquence - et le générateur d'impulsions 113. D'autres architectures pour la mise en oeuvre de ce bloc fonctionnel peuvent être envisagées par l'homme du métier.

Les impulsions de déclenchement $s_{PRF}$ activent un oscillateur 120 pendant une durée brève - de l'ordre de grandeur de celle de l'impulsion, ce qui conduit à la génération d'un train d'oscillations périodiques à une fréquence d'oscillateur $f_c$ très supérieure celle des oscillations du premier signal. Typiquement, si la fréquence des oscillations du premier signal est de l'ordre de quelques dizaines de MHz, $f_c$ sera de l'ordre de quelques GHz. L'oscillateur 120 génère donc des impulsions hyperfréquences. On entend par « hyperfréquences » des fréquences comprises entre 300 MHz et 300 GHz, mais l'oscillateur 120 opérera de préférence dans la plage 1 GHz - 100 GHz.

La forme d'onde générée par l'oscillateur 120 activé/désactivé par une impulsion de déclenchement peut présenter un spectre incompatible avec les réglementations en vigueur. Pour cette raison, les trains d'oscillation (qui, dans la suite, seront appelés aussi « impulsions hyperfréquence ») peuvent être façonnées par un metteur en forme 130. Plusieurs formes d'enveloppes d'impulsion hyperfréquence sont réalisables, en vue d'être compatible de la réglementation et des masques spectraux à respecter. Dans la suite on considérera le cas d'impulsions gaussiennes dont l'enveloppe est donnée par

$$A(t) = e^{-\frac{(t-\gamma\tau)^2}{\tau^2}} \tag{4}$$

Où $\gamma$ est un paramètre sans dimensions qui fixe sa position par rapport à l'impulsion de déclenchement correspondante (par exemple on peut prendre $\gamma = 3$) et $\tau$ un autre paramètre, ayant les dimensions d'un temps, fixe la durée de l'impulsion hyperfréquence, et donc sa largeur spectrale. Si la largeur de bande cible de l'impulsion hyperfréquence est $B_{pulse}$, on obtient

$$\tau = \frac{\sqrt{-2\cdot\ln\left(10^{\log_{10}-x_{dB}}\right)}}{\pi\cdot B_{pulse}} \tag{5}$$

Où $x_{dB}$ est le niveau de référence (en dB) utilisé pour la mesure de la bande $B_{pulse}$ (en général, $x_{dB}$ est choisi égal à -3dB ou -10 dB).

L'oscillateur hyperfréquence 120 est un générateur contrôlé en fréquence piloté par un signal de contrôle $V_{tune}$ de telle sorte que la fréquence $f_c$ varie linéairement dans le temps sur une période $T_{chirp}$, c'est-à-dire pour des impulsions hyperfréquence correspondant à des impulsions de déclenchement d'une même série.

. Avantageusement, ce signal de contrôle est généré par le premier générateur de signaux 112 de manière à assurer un synchronisme entre les variations de fréquence d'oscillation de l'oscillateur 120 et la génération des impulsions de déclenchement. En particulier, le signal de contrôle $V_{tune}$ peut être une réplique des rampes de tension utilisées dans la génération du premier signal. En variante, un générateur de signal de contrôle séparé peut être utilisé.

Optionnellement, un brouilleur de phase 150 peut coopérer avec le metteur en forme d'impulsions pour appliquer un brouillage de phase aux impulsions hyperfréquence, ce qui permet de lisser leur spectre. Un amplificateur de puissance 140 peut également amplifier le signal préalablement à sa transmission.

Le signal issu de l'oscillateur 120 peut s'écrire - à moins d'un coefficient multiplicatif définissant son amplitude, et sans considérer l'éventuel brouillage de phase :

$$|\, s_{TX}(t) = \sum_{n=1}^{nmax} e^{-\frac{(t-\gamma\tau-t_s(n))^2}{\tau^2}} \cdot \sin\left(2\pi f_c(n) \cdot (t - t_s(n))\right) \tag{6}$$

Où la dépendance de la fréquence d'oscillateur $f_c$ et du nombre d'impulsions, et donc du temps, a été mise en évidence.

L'oscillateur 120 et son signal de contrôle $V_{tune}$ sont tels que la fréquence $f_c$ varie linéairement dans le temps d'une impulsion hyperfréquence à l'autre, tout en restant constante au cours d'une même impulsion. Plus particulièrement, l'évolution de la fréquence d'oscillation $f_c$ est avantageusement choisie de manière à ce que la densité spectrale de puissance d'une harmonique k d'ordre élevé de la fréquence de répétition minimale $f_{PRF0}$ des impulsions de déclen-chement se maintienne constante sur une bande spectrale définie par un gabarit. Cela est illustré sur la [Fig. 2] dans le cas $f_{PRF0}$=20 MHz et K=400. Sur la figure, la ligne pointillée représente un gabarit spectral centré autour de 8 GHz et la ligne continue le spectre de l'harmonique k=400 (lissé grâce à un brouillage de phase pour supprimer des oscillations rapides à 20 MHz, v. infra). On comprend que l'efficacité spectrale est maximale lorsque le spectre de l'harmonique se maintient constant sur toute la largeur du gabarit. Pour cela, on choisit une loi d'évolution de la fréquence de l'oscillateur 120 donnée par

$$f_c(n) = K\left(f_{PRF0} + \frac{B_{PRF}}{T_{chirp}} t_s(n)\right) \tag{7}$$

En variante, on peut assouplir la condition de l'équation (7) et requérir seulement que la valeur moyenne de $f_c$ soit un multiple de la fréquence moyenne de répétition des impulsions de déclenchement, $\overline{f_{PRF}} = f_{PRF0} + \frac{B_{PRF}}{2}$

Le spectre $S_{TX}(f)$ du signal $s_{TX}(t)$ donné par (6) et (7) peut s'écrire

$$S_{TX}(f) = \frac{\sqrt{\pi}\tau}{2j} \sum_{n=1}^{nmax} \left( e^{-\left( \pi(f+f_c(n))\tau \right)^2} - e^{-\left( \pi(f-f_c(n))\tau \right)^2} \right) \cdot e^{-j\,2\pi f(t_s(n)+\gamma\tau)} \qquad (8)$$

Où « j » est l'unité imaginaire.

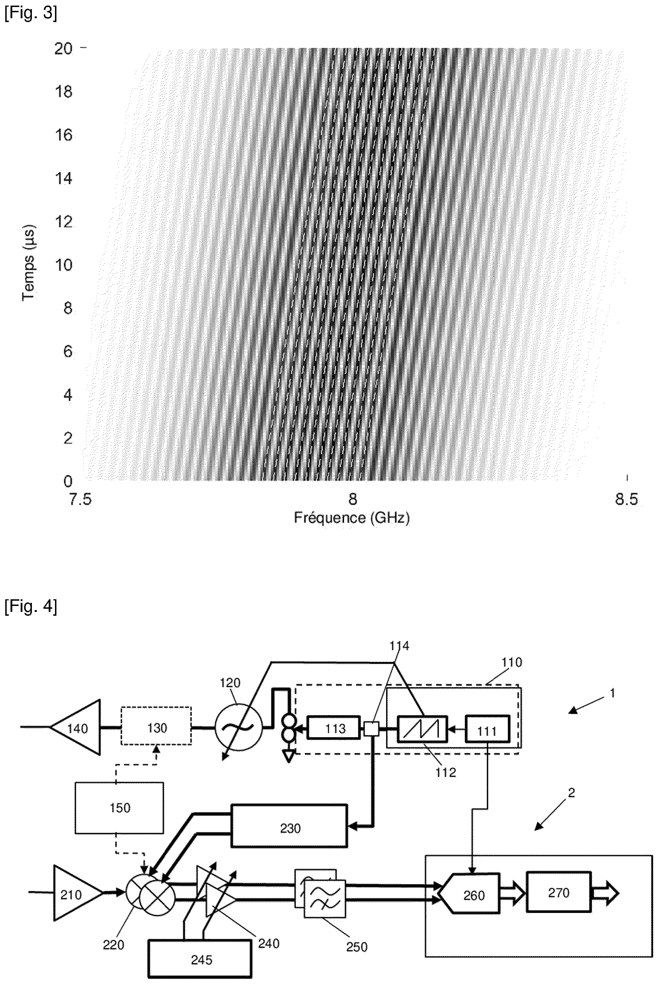

La [Fig. 3] est un spectrogramme du signal $s_{TX}(t)$. Les lignes obliques en pointillé mettent en évidence les harmoniques discrète modulées (« chirpées ») dont la fréquence est donnée par $k\left( f_{PRF0} + \frac{B_{PRF}}{T_{chirp}}t \right)$.

Le spectre de l'équation (8) peut être approché par

$$s_{TX}(t) \approx \sum_{k=0}^{+\infty} c_k(t) \cdot \frac{e^{j2\pi k\left( f_{PRF0}t+\frac{B_{PRF}}{2T_{chirp}}t^2 \right)} - e^{-j2\pi k\left( f_{PRF0}t+\frac{B_{PRF}}{2T_{chirp}}t^2 \right)}}{2\cdot j} \cdot \Pi\left( \frac{t-T_{chirp}/2}{T_{chirp}} \right)$$

$$(9)$$

Où $\Pi$ est une function porte, qui vaut 1 à l'intérieur de l'intervalle [-½ , ½] et 0 à l'extérieur. Il est possible de vérifier que les coefficients $c_k(t)$ de la série varient assez peu sur une durée $T_{chirp}$ ; il est donc possible de les remplacer par leurs valeurs moyennes $\overline{c_k}$ sur ladite durée $T_{chirp}$. On obtient donc :

$$s_{TX}(t) \approx \overline{s_{TX}(t)}$$

$$= \sum_{k=0}^{+\infty} \overline{c_k} \cdot \frac{e^{j2\pi k\left( f_{PRF0}t+\frac{B_{PRF}}{2T_{chirp}}t^2 \right)} - e^{-j2\pi k\left( f_{PRF0}t+\frac{B_{PRF}}{2T_{chirp}}t^2 \right)}}{2\cdot j} \cdot \Pi\left( \frac{t - \dfrac{T_{chirp}}{2}}{T_{chirp}} \right)$$

$$= \sum_{k=0}^{+\infty} \overline{c_k} \cdot \sin\left( 2\pi k\left( f_{PRF0}t + \frac{B_{PRF}}{2T_{chirp}}t^2 \right) \right), \forall t \in [0, T_{train}) \qquad (10)$$

L'équation (10) met en évidence le fait que le signal radar généré peut s'écrire comme une somme de composantes modulées en fréquence autour d'un multiple de la fréquence fondamentale $f_{PRF0}$. La composante la plus intense correspond à k=K. Le fait d'utiliser un signal oscillatoire à fréquence relativement basse (le premier signal) pour générer des impulsions de déclenchement d'un oscillateur hyperfréquence permet d'obtenir un bruit de phase particulièrement faible, comme démontré dans (Siligaris 2023). Contrairement au cas de (Siligaris 2023), cependant, dans le cas de l'invention le signal radar est impulsionnel et la fréquence de la porteuse hyperfréquence évolue linéairement d'une impulsion à l'autre.

Le signal $s_{TX}(t)$ est destiné à être émis par une antenne radar et réfléchi par une ou plusieurs cibles. Les signaux d'écho sont ensuite détectés et démodulés pour en extraire une information de distance de la cible. Si on considère une seule cible à une distance D des antennes d'émission et réception (supposée coïncidentes ou colocalisées - cas du radar monostatique, mais la généralisation au cas bistatique ne pose aucune difficulté), l'écho est reçu avec un retard $\tau_{AR} = D/c$, où c est la vitesse de la lumière. Le signal reçu s'écrit donc (à moins d'un facteur multiplicatif d'amplitude) :

$$\overline{s_{TX}}(t - \tau_{AR}) = \sum_{k=0}^{+\infty} \overline{c_k} \cdot \frac{e^{j2\pi k\left( f_{PRF0}(t-\tau_{AR})+\frac{B_{PRF}}{2T_{chirp}}(t-\tau_{AR})^2 \right)} - c.c.}{2\cdot j} \quad , \forall t \in \left[ \tau_{AR}, T_{chirp} \right)$$

$$(11)$$

Où « c.c. » désigne le complexe conjugué et la fonction porte peut être omise étant donné que le temps n'est défini que sur un intervalle $[\tau_{AR}, T_{chirp})$, c'est-à-dire entre le début de la réception de l'écho et la fin du signal d'émission.

La démodulation de ce signal reçu peut être effectuée de plusieurs façons. Deux seront considérées dans la suite (ainsi que leur combinaison) :

- Démodulation cohérente au moyen d'un signal d'oscillateur local modulé linéairement en fréquence ;
- Echantillonnage non uniforme.

La [Fig. 4] montre le schéma fonctionnel d'un dispositif radar selon un mode de réalisation de l'invention comprenant une voie d'émission 1 et une voie de réception 2. La voie d'émission est essentiellement constituée d'un dispositif de génération d'un signal radar du type de la [Fig. 1]. La voie de réception 2 réalise une démodulation cohérente d'un signal d'écho reçu, comme expliqué ci-après.

La voie de réception 2 comprend un amplificateur à bas bruit 210 pour pré-amplifier le signal reçu, suivi d'un mélangeur I/Q 220 pour le convertir à une fréquence intermédiaire. Le mélangeur reçoit également en entrée un signal d'oscillateur local $s_{RX}$, qu'il multiplie par le signal d'écho préamplifié. Le signal d'oscillateur local $s_{RX}$ est un signal modulé linéairement en fréquence, qui reproduit l'harmonique K des oscillations du premier signal. :

$$\left| s_{RX} = e^{j2\pi K\left(f_{PRF0}t + \frac{B_{PRF}}{2T_{chirp}}t^2\right)}\right. \tag{12}$$

Ce signal est avantageusement obtenu en prélevant au moyen d'un séparateur 114 une portion du premier signal à l'intérieur du module 110 et en en multipliant la fréquence d'un facteur K, par exemple au moyen d'une PLL 230.

En écrivant le signal d'écho comme somme de ses deux quadratures

$$\overline{s_{TX}}(t - \tau_{AR}) = \overline{s_{TX}}(t - \tau_{AR})_I + j \cdot \overline{s_{TX}}(t - \tau_{AR})_Q \tag{13}$$

On trouve que le signal en sortie du mélangeur 220 peut s'écrire

$$[0079]\, s_{MIX}(t) = \left(\overline{s_{TX}}(t - \tau_{AR})_I + j \cdot \overline{s_{TX}}(t - \tau_{AR})_Q\right) \cdot conj\left(s_{RX}(t)\right) = \sum_{k=0}^{+\infty} \overline{c}_k \cdot$$

$$e^{j2\pi k\left(f_{PRF0}(t-\tau_{AR}) + \frac{B_{PRF}}{2T_{chirp}}(t-\tau_{AR})^2\right) - j2\pi K\left(f_{PRF0}t + \frac{B_{PRF}}{2T_{chirp}}t^2\right)} \tag{14}$$

Où « conj » désigne l'opération de conjugaison complexe. En posant $\alpha = \dfrac{B_{PRF}}{T_{chirp}}$ on peut écrire, de manière plus compacte:

$$\left| s_{MIX}(t) = \sum_{k=0}^{+\infty} \overline{c}_k \cdot e^{j2\pi\left(-2\cdot k \cdot \alpha \cdot \tau_{AR} \cdot t - k \cdot f_{PRF0}t\tau_{AR} + k\cdot\alpha\cdot\tau_{AR}^2 - (k-K)\cdot(f_{PRF0}t\cdot t + \alpha t^2)\right)} \right. \tag{15}$$

On observe que, pour k=K, on obtient un signal à fréquence intermédiaire « utile »

$$s_{IF}(t) = \overline{c_{k_r}} \cdot e^{j2\pi\left(-2\cdot K\cdot\alpha\cdot\tau_{AR}\cdot t - k_r\cdot f_{PRF0}\tau_{AR} + k_r\cdot\alpha\cdot\tau_{AR}^2\right)} = \overline{c_{k_r}} \cdot e^{j2\pi(-2\cdot K\cdot\alpha\cdot\tau_{AR}\cdot t)} e^{j\varphi} \tag{16}$$

Où $\varphi = 2\pi(-k_r \cdot f_{PRF0}\tau_{AR} + k_r \cdot \alpha \cdot \tau_{AR}^2)$ est un déphasage constant dans le temps. Ce signal $s_{IF}$(t) est essentiellement un signal sinusoïdal dont la fréquence est proportionnelle au temps de vol $\tau_{CAR}$, et donc à la distance de la cible.

Pour toute valeur de k autre que K, on aura d'autres contributions dans le spectre à savoir des spectres étalés dépendants de la différence K - k et portées à une fréquence supérieure en valeur absolue à celle du signal utile $s_{IF}$(t), dépendant de k et avec un déphasage supplémentaire dépendant de la distance et proportionnel à k. L'amplitude de ces autres contributions sera plus faible relativement à la composante utile $s_{IF}$(t) à cause du fait que ces signaux seront étalées spectralement et pondérés par les coefficients $\overline{c}_k$ d'amplitude moindre que $\overline{c_{k=K}}$.

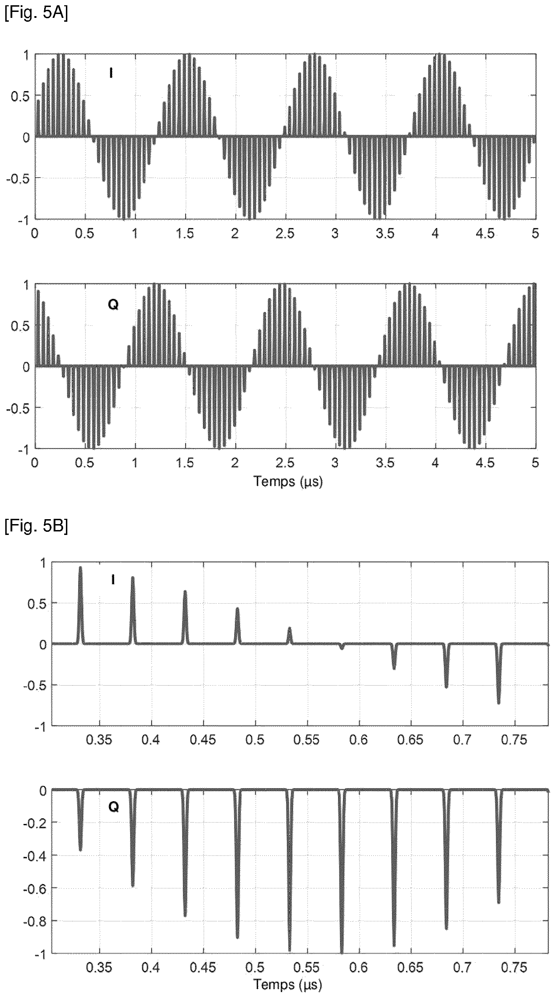

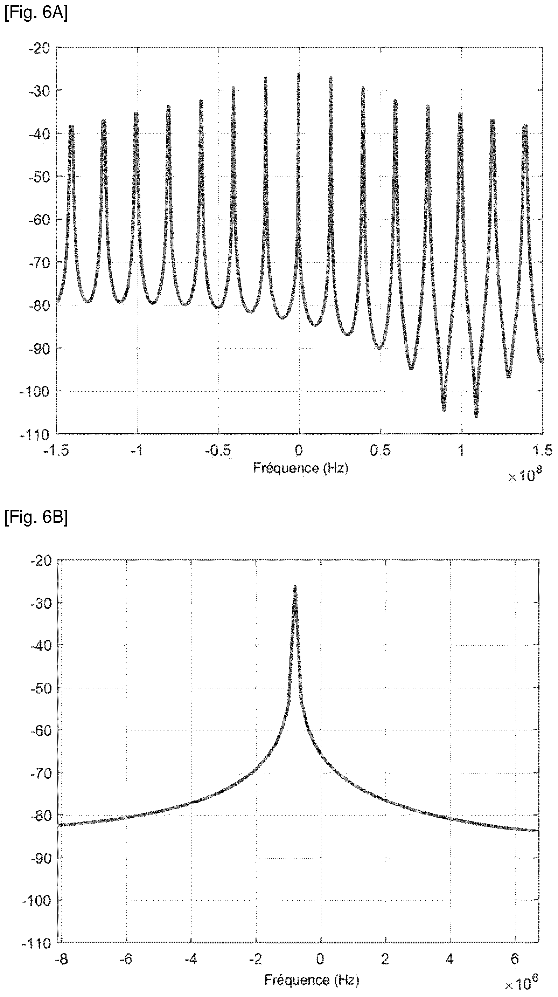

La [Fig. 5A] montre un graphique des composantes I (panneau supérieur) et Q (panneau inférieur) du signal $s_{MIX}$(t). La [Fig. 5B] en est une vue de détail obtenue en dilatant l'axe du temps. La [Fig. 6A] est le spectre de ce signal, montrant un pic central correspondant au signal utile à fréquence intermédiaire - dont la position donne accès à la distance de la cible - et des pics secondaires à des fréquences plus élevées (multiples de $f_{PRF0}$) moins intenses et plus étalés spectralement, correspondant aux harmoniques d'ordre différent de K. La [Fig. 6B] en est une vue de détail obtenue en dilatant l'axe du temps, de manière à ne montrer que le pic central.

Un filtre passe-bas 250 permet de filtrer ces composantes spectrales indésirables, puis un convertisseur analogique-numérique 260 échantillonne et numérise le signal filtré. Grâce au filtrage des harmoniques de $f_{PRF0}$ qui évite les effets de repliement du spectre, le convertisseur analogique-numérique 260 peut fonctionner à une cadence d'acquisition relativement faible, de l'ordre de $f_{PRF0}$ (20 MSpS pour $f_{PRF0}$=20 MHz). Avantageusement, le convertisseur 260 peut recevoir un signal de cadencement du premier générateur de signaux 110, et plus particulièrement de l'horloge 111.

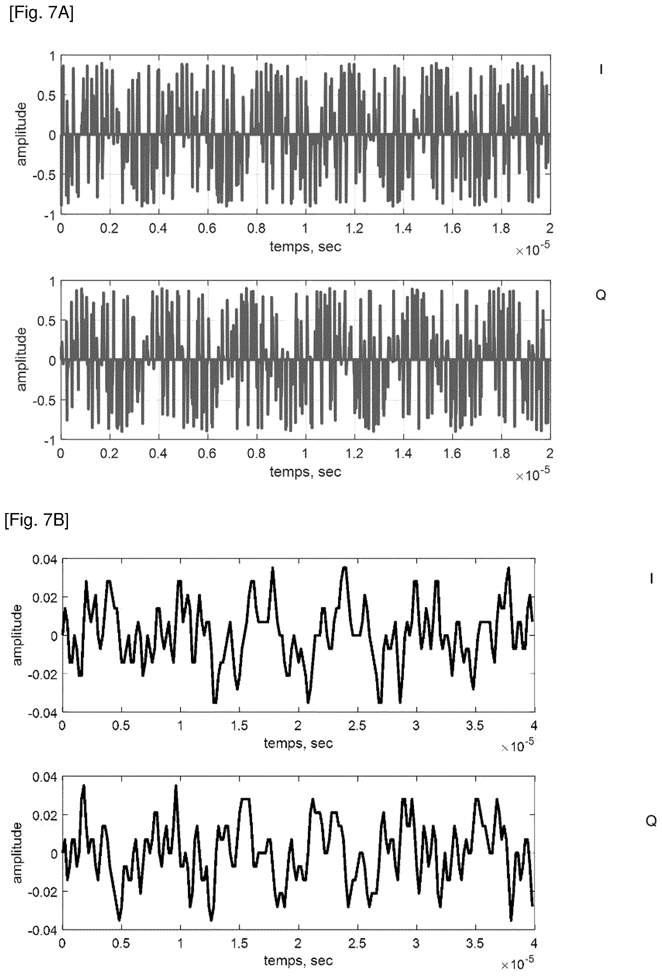

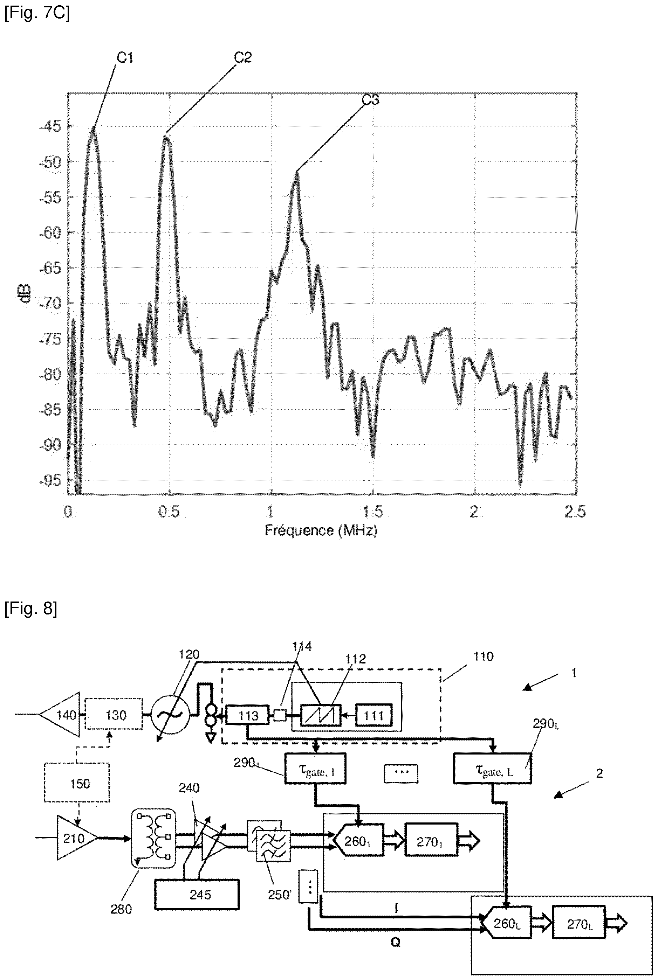

Le dispositif radar de la [Fig. 4] fonctionne également en présence de plusieurs cibles à des distances différentes. Par exemple, la [Fig. 7A] illustre le signal en sortie du mélangeur 220 dans le cas de trois cibles C1, C2 et C3 à des distances de 1m, 5m et 12m, respectivement. La [Fig. 7B] illustre le signal en sortie du filtre passe-bas 250, et la [Fig. 7C] son spectre, obtenu par exemple à la sortie d'un module numérique de calcul de la transformée de Fourier rapide (FFT) 270. Sur le spectre on distingue clairement les trois pics correspondant aux trois cibles.

La nature impulsionnelle du signal reçu permet de bénéficier d'un système d'adaptation du gain mis à la sortie du mélangeur, ce qui permet soit de compenser de manière analogique l'atténuation du signal due aux pertes en espace libre, soit de compenser les effets de disparités de section efficace radar (RCS) présents dans des cases de distance différentes, soit d'atténuer des échos parasites, soit n'importe quelle combinaison de ces différentes options. Comme illustré sur la [Fig. 4], le système d'adaptation du gain comprend des amplificateurs à gain variable 240 pilotés par un profileur de gain 245. Ce dernier peut appliquer un profil de gain prédéfini ou bien le déterminer de manière automatique en fonction de l'évolution temporelle de l'amplitude du signal reçu. Même en l'absence d'adaptation de gain, la séparation temporelle des impulsions évite de saturer le récepteur et permet donc d'améliorer la dynamique du radar. Grâce à la séparation temporelle des impulsions, la résolution du convertisseur 260 peut être relativement faible, par exemple égale à 8 bits.

La [Fig. 8] montre le schéma fonctionnel d'un dispositif radar selon un autre mode de réalisation de l'invention comprenant une voie d'émission 1 et une voie de réception 2. La voie d'émission est essentiellement constituée d'un dispositif de génération d'un signal radar du type de la [Fig. 1]. La voie de réception 2 diffère de celle du dispositif de la [Fig. 8] principalement par l'absence du mélangeur 220 (et donc également du multiplicateur de fréquence 230), par la présence d'un coupleur 280 pour générer les composantes I et Q à partir du signal reçu et préamplifié et par le fait que le convertisseur analogique-numérique est piloté par les impulsions de déclenchement $s_{FRF}$ issues du générateur 113 et décalées temporellement d'une durée $\tau_{gate}$ par une ligne de retard. Comme cela sera expliqué ci-après, une valeur donnée du retard ne permet que de détecter un signal d'écho correspondant à un temps de vol $\tau_{AR} = \tau_{gate}$. Pour détecter des cibles à des distances inconnues on peut donc prévoir une ligne de retard variable, pour une acquisition séquentielle, ou une pluralité de lignes de retard introduisant des retards différents $\tau_{gate,1} \dots \tau_{gate,\ell} \dots \tau_{gate,L}$ pour piloter des convertisseurs respectifs $260_1 \dots 260_L$, chacun équipé de son propre module de calcul de la transformée $270_1 \dots 270_L$. C'est cette deuxième solution qui est représentée sur la figure. Ces convertisseurs fonctionnant en parallèle présentent une faible cadence d'acquisition dans l'exemple considéré, 20 MSps, où 1 MSps = $10^6$ échantillons par seconde) et une résolution modeste (par exemple 8 bits), ils sont donc petits et présentent une faible consommation, ce qui permet d'en multiplier le nombre. Il est également possible de combiner les approches, en utilisant plusieurs lignes de retard variables en parallèle.

Un convertisseur analogique - numérique cadencé par une impulsion de déclenchement décalée temporellement d'un retard $\tau_{gate}$ acquiert le signal d'écho - filtré par le filtre passe-bas 250' - à des instants

$$t_{acc}(m) = \sum_n^{nmax} \delta_{\tau_{GATE}+t_s(n)+\gamma\tau} \qquad (17)$$

Il faut noter que le filtre passe-bas 250' présente une fréquence de coupure très supérieure à celle du filtre 250 du mode de réalisation de la [Fig. 4], car il opère sur un signal à radiofréquence.

Le convertisseur analogique - numérique présente une large bande passante analogique allant jusqu'à la porteuse hyperfréquence (par exemple à 8GHz) mais sa cadence d'échantillonnage est beaucoup plus faible (de l'ordre de $f_{PRF0}$, par exemple 20 MHz), ce qui définit en grande partie sa consommation énergétique et sa faisabilité.

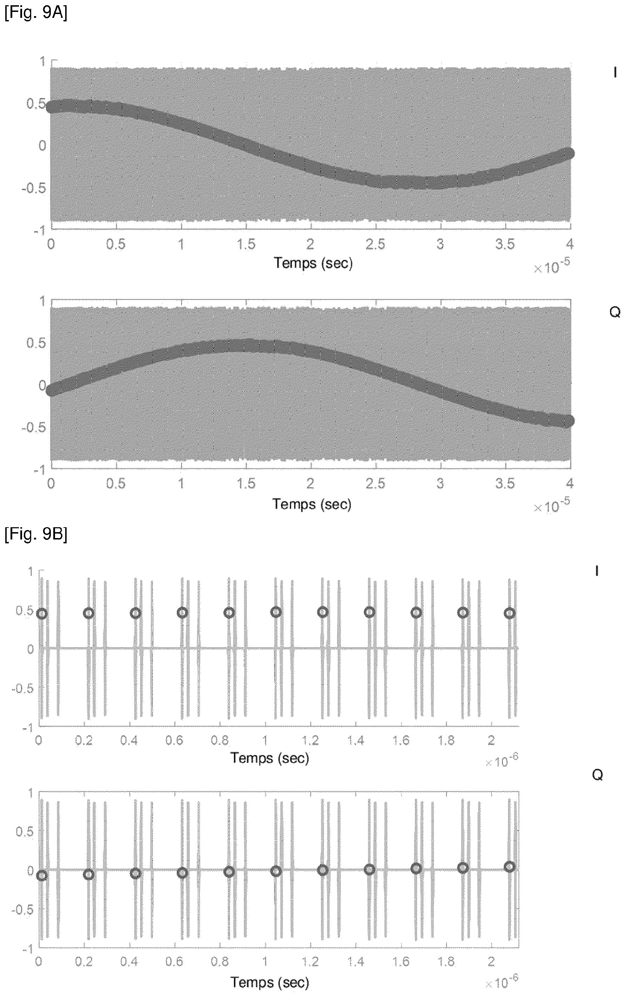

L'équation (17) définit un sous-échantillonnage du signal d'écho à hyperfréquence, qui permet d'extraire la composante correspondant à un temps de vol $\tau_{AR} = \tau_{gate}$, comme illustré sur la [Fig. 9A] et la [Fig. 9B]. Sur la [Fig. 9B], en particulier, on distingue clairement les groupes de trois impulsions d'échos correspondant aux trois cibles.

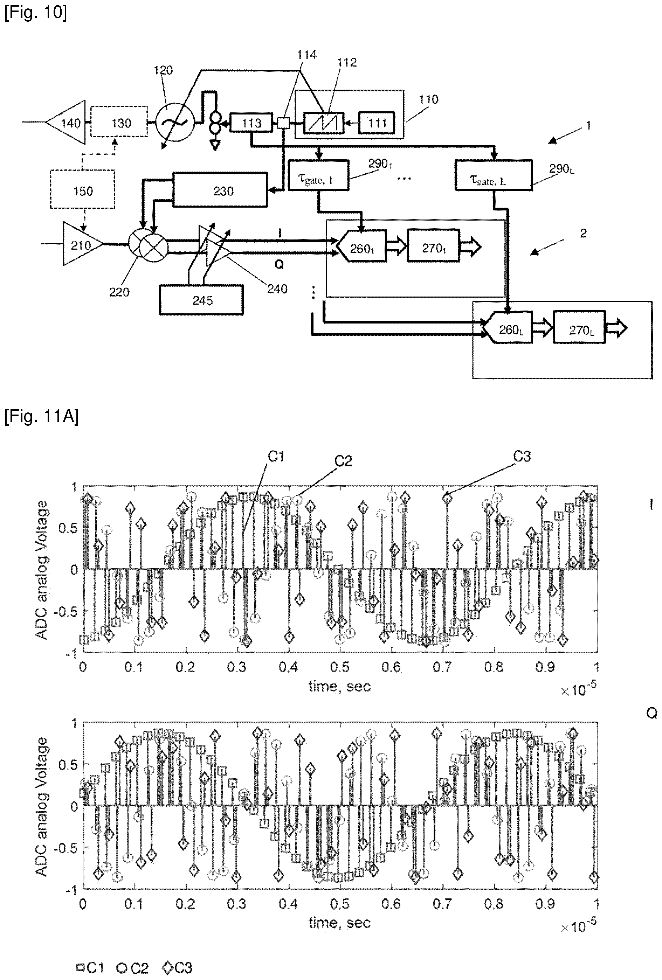

Le mode de réalisation de la [Fig. 10] combine conversion de fréquence au moyen du mélangeur 220 et du multiplicateur de fréquence, et détection directe par échantillonnage au moyen de convertisseurs $260_1$ ... $260_L$ cadencé par des impulsions de déclenchement décalées au moyen de lignes de retard $290_1$ ...$290_L$. Cela permet d'éviter l'utilisation d'un filtre passe-bas.

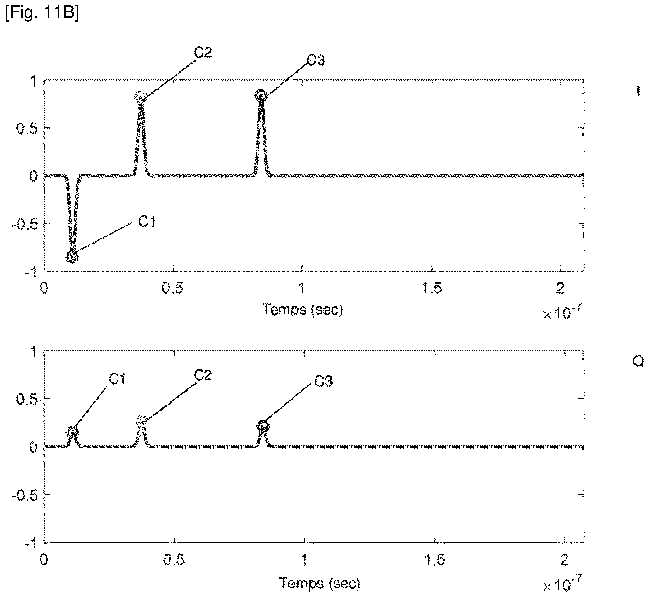

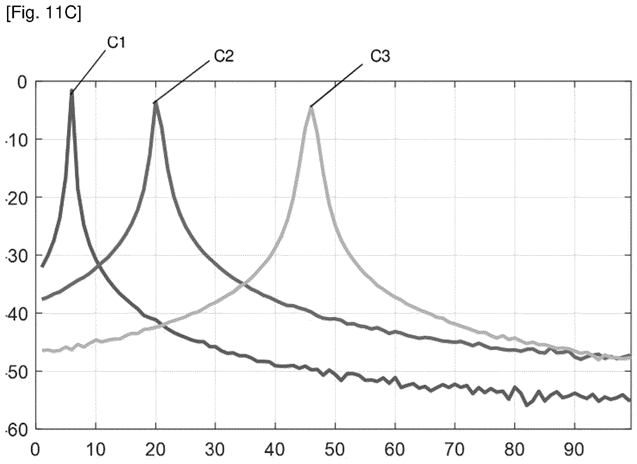

La [Fig. 11A] la [Fig. 11B] illustrent l'échantillonnage du signal à fréquence intermédiaire conformément à ce mode de réalisation de l'invention. La [Fig. 11C] montre la transformée de Fourier des signaux échantillonnés avec trois décalages correspondant aux temps de vol pour des cibles à 1, 5 et 12 mètres.

L'invention a été décrite en référence à des modes de réalisation particuliers, mais des variantes sont possibles. Par exemple, la génération de deux composantes I et Q des signaux n'est pas essentielle (mais avantageuse, car elle permet de réduire la cadence d'acquisition). De même, les plages de fréquence indiquées ne le sont qu'à titre d'exemple non limitatif.

L'invention convient particulièrement à la réalisation de radars « sur puce » dans lesquels le dispositif radar (ou au moins la voie d'émission et/ou la voie d'acquisition) est intégré monolithiquement, mais elle ne se limite pas à ce cas de figure.

Références

(Antide 2020) E. Antide, M. Zarudniev, O. Michel et M. Pelissier, "Comparative Study of Radar Architectures for Human Vital Signs Measurement," 2020 IEEE Radar Conférence (RadarConf20), Florence, Italy, 2020, pp. 1-6, doi: 10.1109/RadarConf2043947.2020.9266569.

(Liu 209) Y.-H. Liu et al., "9.3 A680 μ W Burst-Chirp UWB Radar Transceiver for Vital Signs and Occupancy Sensing up to 15m Distance," 2019 IEEE International Solid- State Circuits Conférence - (ISSCC), San Francisco, CA, USA, 2019, pp. 166-168, doi: 10.1109/ISSCC.2019.8662536.

(Andersen 2017) N. Andersen et al., "A 118-mW Pulse-Based Radar SoC in 55-nm CMOS for Non-Contact Human Vital Signs Détection," in IEEE Journal of Solid-State Circuits, vol. 52, no. 12, pp. 3421-3433, Dec. 2017, doi: 10.1109/JSSC.2017.2764051.

(Siligaris 2023) Siligaris, A., Bossuet, A., Barrau, L., Antide, E., Gonzalez-Jimenez, J. L., Dehos, C., & Zarudniev, M. (2023, September). Fast Chirping 58-64 GHz FMCW Radar Transceiver using D-PROT Multiplier in CMOS 45nm RFSOI for Vital Signs Détection. In ESSCIRC 2023-IEEE 49th European Solid State Circuits Conference (ESSCIRC) (pp. 505-508). IEEE.

**Revendications**

1. Dispositif de génération d'un signal radar comprenant :

   - un générateur (110) de séries, répétées périodiquement, d'impulsions de déclenchement ($s_{PRF}$), les impulsions d'une même série présentant un espacement temporel variable linéairement; et
   - un oscillateur (120) configuré pour recevoir en entrée lesdits impulsions de déclenchement et pour générer un train d'oscillations périodiques en correspondance de chaque dite impulsion de déclenchement ;

   **caractérisé en ce que**

   - ledit oscillateur (120) présente une fréquence variable en fonction d'un signal de contrôle ($V_{tune}$); et **en ce que**
   - le dispositif comprend également un générateur (112) dudit signal de contrôle, adapté pour varier linéairement dans le temps la fréquence de l'oscillateur (120) d'un train d'oscillations périodiques à l'autre pour des trains d'oscillations périodiques déclenchés par des impulsions de déclenchement appartenant à une même série.

2. Dispositif selon la revendication 1 dans lequel l'oscillateur (120) et le générateur (112) dudit signal de contrôle sont configurés pour que la fréquence moyenne des oscillations desdits trains d'oscillations périodiques soit un multiple, d'un facteur K>1, d'une fréquence moyenne de répétition des impulsions de déclenchement.

3. Dispositif selon la revendication 2 dans lequel ledit générateur (110) de séries d'impulsions de déclenchement comprend un premier générateur de signaux (112) et un générateur d'impulsions de déclenchement (113), le premier générateur de signaux (112) étant configuré pour générer un premier signal constitué de répétitions périodiques de trains d'oscillations modulées linéairement en fréquence, le générateur de signaux de déclenchement étant configuré pour recevoir en entrée ledit premier signal et pour générer lesdites impulsions de déclenchement de manière synchrone aux oscillations dudit premier signal.

4. Dispositif selon la revendication 3 dans lequel l'oscillateur (120) et le générateur dudit signal de contrôle (112) sont configurés pour que la fréquence du train d'oscillations périodiques généré en correspondance d'une $n^{\text{ème}}$ impulsion de déclenchement d'une dite série soit donnée par :

$$f_c(n) = K\left( f_{PRF0} \pm \frac{B_{PRF}}{T_{chirp}} t_s(n) \right)$$

où $f_{PRF0}$ est la fréquence des oscillations du premier signal au début de chaque train d'oscillations modulées en fréquence, $\frac{B_{PRF}}{T_{chirp}}$ le taux de modulation en fréquence desdites oscillations et $t_s(n)$ un instant de génération de ladite nème impulsion de déclenchement, avec $t_s(n = 1) = 0$.

5. Dispositif selon l'une des revendications 3 ou 4 dans lequel ledit premier générateur de signaux (112) est configuré pour que la modulation en fréquence des oscillations dudit premier signal soit pilotée par ledit signal de contrôle.

6. Dispositif selon l'une des revendications 2 à 5 dans lequel le facteur K est supérieur ou égale à 10 et de préférence compris entre 100 et 1000.

7. Dispositif selon l'une des revendications précédentes comprenant également un metteur en forme d'impulsions (130) pour modifier le profil temporel desdits trains d'oscillations périodiques.

8. Dispositif selon l'une des revendications précédentes dans lequel ledit oscillateur (120) est un oscillateur hyperfréquences.

9. Dispositif selon l'une des revendications précédentes comprenant également un dispositif (150) pour appliquer un brouillage de phase auxdits trains d'oscillations périodiques.

10. Dispositif radar comprenant :

    - une voie d'émission (1) comprenant un dispositif de génération d'un signal radar selon l'une des revendications précédentes ; et
    - une voie de réception (2) configurée pour recevoir des échos dudit signal radar et pour les démoduler de manière synchrone à leur génération de manière à en extraire une information de temps de vol.

11. Dispositif selon la revendication 10 dans lequel la voie de réception (2) comprend un amplificateur (240) équipé d'un dispositif d'ajustement automatique de gain (245) pour compenser des variations d'intensité des échos reçus.

12. Dispositif selon l'une des revendications 10 et 11 dans lequel :

    - le dispositif de génération d'un signal radar de la voie d'émission (1) est un dispositif selon l'une des revendications 3 à 6, ou l'une des revendications 7 à 9 lorsqu'elle dépend de la revendication 3, comprenant ledit premier générateur de signaux (112) configuré pour générer ledit premier signal constitué de répétitions périodiques de trains d'oscillations modulées linéairement en fréquence ; et
    - la voie de réception comprend :

        - un multiplicateur de fréquence (230) configuré pour recevoir en entrée ledit premier signal et en multiplier la fréquence par ledit facteur K ; et
        - un mélangeur (220) configuré pour recevoir en entrée lesdits échos radar et les démoduler par mélange avec un signal issu dudit multiplicateur de fréquence (230) afin d'obtenir un signal démodulé ;
        - un filtre passe-bas (250) configuré pour atténuer des composantes dudit signal démodulé à des fréquences multiples de ladite fréquence moyenne de répétition des impulsions de déclenchement ; et
- un convertisseur analogique - numérique ($260$, $260_1$, $260_L$) présentant une cadence d'acquisition adaptée pour convertir un signal à ladite fréquence moyenne de répétition.

13. Dispositif selon l'une des revendications 10 et 11 dans lequel :

- le dispositif de génération d'un signal radar de la voie d'émission (1) est un dispositif selon la revendication 2 ; et
- la voie de réception (2) comprend au moins un convertisseur analogique - numérique ($260_1$,$260_L$) présentant une bande passante analogique de largeur au moins égale à la largeur spectrale desdits échos reçus mais une cadence d'acquisition adaptée pour convertir un signal à ladite fréquence moyenne de répétition des impulsions de déclenchement, ledit convertisseur étant synchronisé avec lesdites impulsions de déclenchement à travers une ligne de retard ($290_1$, $290_L$).

14. Dispositif selon l'une des revendications 10 et 11 dans lequel :

- le dispositif de génération d'un signal radar de la voie d'émission (1) est un dispositif selon l'une des revendications 3 à 6, ou l'une des revendications 7 à 9 lorsqu'elle dépend de la revendication 3, comprenant ledit premier générateur de signal (112) configuré pour générer ledit premier signal constitué de répétitions périodiques de trains d'oscillations modulées linéairement en fréquence ; et

- la voie de réception (2) comprend :

- un multiplicateur de fréquence (230) configuré pour recevoir en entrée ledit premier signal et en multiplier la fréquence dudit facteur K ; et
- un mélangeur (220) configuré pour recevoir en entrée lesdits échos radar et les démoduler par mélange avec un signal issu dudit multiplicateur de fréquence (230) afin d'obtenir un signal démodulé ; et
- au moins un convertisseur analogique - numérique ($260_1$, $260_L$) présentant une bande passante analogique de largeur au moins égale à la largeur spectrale desdits échos reçus mais une cadence d'acquisition adaptée pour convertir un signal à ladite fréquence moyenne de répétition des impulsions de déclenchement, ledit convertisseur étant synchronisé avec lesdites impulsions de déclenchement à travers une ligne de retard ($290_1$, $290_L$).

15. Dispositif selon l'une des revendications 13 ou 14 dans lequel ladite ligne de retard présente un retard variable.

16. Dispositif selon l'une des revendications 13 ou 14 dans lequel la voie de réception comprend une pluralité de dits convertisseurs analogique - numérique ($260_1$, $260_L$) synchronisés avec lesdites impulsions de déclenchement à travers des lignes de retard respectives introduisant des retards différents.

17. Dispositif selon l'une des revendications 10 à 16 dans lequel le dispositif de génération d'un signal radar de la voie d'émission (1) comprend un dispositif pour appliquer un brouillage de phase (150) et la voie d'émission comprend un dispositif de débrouillage de phase (150).

18. Procédé de génération d'un signal radar comprenant la génération de séries, répétées périodiquement, de trains d'oscillations périodiques, les trains d'oscillations d'une même série présentant un espacement temporel variable linéairement; la fréquence des oscillations variant linéairement d'un train d'oscillations périodiques à l'autre dans une même série.

[Fig. 1]

[Fig. 2]

[Fig. 3]

[Fig. 4]

[Fig. 5A]

[Fig. 5B]

[Fig. 6A]

[Fig. 6B]

[Fig. 7A]

[Fig. 7B]

[Fig. 7C]

[Fig. 8]

[Fig. 9A]

I

Temps (sec) ×10⁻⁵

Q

Temps (sec) ×10⁻⁵

[Fig. 9B]

I

Temps (sec) ×10⁻⁶

Q

Temps (sec) ×10⁻⁶

[Fig. 10]

[Fig. 11A]

□C1  ○C2  ◇C3

[Fig. 11B]

[Fig. 11C]

Europäisches
Patentamt

European
Patent Office

Office européen
des brevets

# RAPPORT DE RECHERCHE EUROPEENNE

**Numéro de la demande**

EP 24 21 6401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 116 613 A1 (COMMISSARIAT ENERGIE ATOMIQUE [FR]) 27 mai 2022 (2022-05-27) | 18 | INV. G01S13/22 |
| Y | * alinéas [0001], [0052], [0054], [0073], [0091], [0092], [0100], [0101], [0103]; figures 1, 2 * | 1,2, 6-11,13, 15-17 | G01S13/26 G01S7/282 G01S7/285 |
| A | | 3-5,12, 14 | G01S13/30 |
| | ----- | | |
| Y | FR 2 738 352 A1 (DASSAULT ELECTRONIQUE [FR]) 7 mars 1997 (1997-03-07) | 1,2, 6-11,13, 15-17 | |
| A | * page 1, ligne 28 - ligne 34; page 4, ligne 34 - page 5, ligne 2; page 5, ligne 21 - ligne 31; figures 2, 3, 8 * | 3-5,12, 14 | |
| | ----- | | |
| A | LIU YAO-HONG ET AL: "An Ultralow Power Burst-Chirp UWB Radar Transceiver for Indoor Vital Signs and Occupancy Sensing in 40-nm CMOS", IEEE SOLID-STATE CIRCUITS LETTERS, IEEE, vol. 2, no. 11, 1 novembre 2019 (2019-11-01), pages 256-259, XP011758715, DOI: 10.1109/LSSC.2019.2951423 * page 256, colonne 2; figures 1, 8 * | 1,3 | **DOMAINES TECHNIQUES RECHERCHES (IPC)** G01S |
| | ----- | | |
| A | SUNGEUN LEE ET AL: "A $K$-Band CMOS UWB Radar Transmitter With a Bi-Phase Modulating Pulsed Oscillator", IEEE TRANSACTIONS ON MICROWAVE THEORY AND TECHNIQUES, IEEE, USA, vol. 60, no. 5, 1 mai 2012 (2012-05-01), pages 1405-1412, XP011442430, ISSN: 0018-9480, DOI: 10.1109/TMTT.2012.2188814 * page 1406, colonne 1; figures 1(a), 1(b) * | 1,3 | |
| | ----- | | |

Le présent rapport a été établi pour toutes les revendications

| Lieu de la recherche | Date d'achèvement de la recherche | Examinateur |
|---|---|---|
| Munich | 2 avril 2025 | Kirscher, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 4 564 055 A1**

## ANNEXE AU RAPPORT DE RECHERCHE EUROPEENNE
## RELATIF A LA DEMANDE DE BREVET EUROPEEN NO.

EP 24 21 6401

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2025

| Document brevet cité au rapport de recherche | Date de publication | Membre(s) de la famille de brevet(s) | Date de publication |
|---|---|---|---|
| FR 3116613 A1 | 27-05-2022 | EP 4006571 A1 | 01-06-2022 |
| | | FR 3116613 A1 | 27-05-2022 |
| | | US 2022163648 A1 | 26-05-2022 |
| FR 2738352 A1 | 07-03-1997 | DE 3101974 C1 | 22-05-1997 |
| | | FR 2738352 A1 | 07-03-1997 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3116613

- FR 2738352

**Littérature non-brevet citée dans la description**

- **LIU YAO-HONG et al.** An Ultralow Power Burst-Chirp UWB Radar Transceiver for Indoor Vital Signal and Occupancy Sensing in 40-nm CMOS. *IEEE Solid-State Circuit Letters*, 01 November 2019, vol. 2 (11)
- **E. ANTIDE** ; **M. ZARUDNIEV** ; **O. MICHEL** ; **M. PELISSIER**. Comparative Study of Radar Architectures for Human Vital Signs Measurement. *IEEE Radar Conférence (RadarConf20)*, 2020, 1-6
- **Y.-H. LIU et al.** 9.3 A 680 μ W Burst-Chirp UWB Radar Transceiver for Vital Signs and Occupancy Sensing up to 15m Distance. *IEEE International Solid- State Circuits Conférence - (ISSCC)*, 2019, 166-168

- **N. ANDERSEN et al.** A 118-mW Pulse-Based Radar SoC in 55-nm CMOS for Non-Contact Human Vital Signs Détection. *in IEEE Journal of Solid-State Circuits*, December 2017, vol. 52 (12), 3421-3433
- **SILIGARIS** ; **A., BOSSUET** ; **A., BARRAU** ; **L., ANTIDE, E.** ; **GONZALEZ-JIMENEZ** ; **J. L., DEHOS** ; **C., & ZARUDNIEV, M**. *Fast Chirping*, September 2023, 58-64
- ESSCIRC 2023-IEEE 49th European Solid State Circuits Conference (ESSCIRC). IEEE., 505-508